# EUROPEAN PATENT SPECIFICATION

(11) **EP 2 848 810 B1**
(45) Date of publication and mention of the grant of the patent: **18.04.2018**
(21) Application number: 14184860.6
(22) Date of filing: 16.09.2014
(51) Int. Cl.: F04B 39/02, F04B 35/04, F04B 39/12, F04B 53/00

(54) **Reciprocating compressor**
Kolbenkompressor
Compresseur à mouvement alternatif

(30) Priority: 16.09.2013 KR 20130111291
(43) Date of publication of application: 18.03.2015
(73) Proprietor: LG ELECTRONICS INC., Yeongdeungpo-Gu Seoul 150-721 (KR)
(72) Inventor: Choi, Kichul, 153-802 Seoul (KR); Ahn, Kwangwoon, 153-802 Seoul (KR); Kim, Donghan, 153-802 Seoul (KR)
(74) Representative: Vossius & Partner Patentanwälte Rechtsanwälte mbB

(56) References cited:
- EP-A2- 2 568 173
- WO-A2-2013/071382
- US-A- 2 752 001
- US-A1- 2008 008 606
- US-A1- 2009 238 701
- US-A1- 2010 146 922

## Description

### BACKGROUND

The present disclosure relates to a reciprocating compressor, and more particularly, a reciprocating compressor including a gas bearing.

In general reciprocating compressors, a piston suctions and compressors a refrigerant while the piston is linearly reciprocated within a cylinder to discharge the refrigerant. Reciprocating compressors may be classified into connection-type reciprocating compressors and vibration-type reciprocating compressors according to an operation method of a piston.

In such a connection-type reciprocating compressor, a piston is connected to a rotation shaft of the rotation motor through a connecting rod to compress a refrigerant while the piston is reciprocated within a cylinder. On the other hand, in such a vibration-type reciprocating compressor, a piston is connected to a mover of a reciprocating motor to compressor a refrigerant while the piston is reciprocated and vibrated within a cylinder. The present disclosure relates to the vibration-type reciprocating compressor. Thus, hereinafter, the vibration-type reciprocating compressor will be called a reciprocating compressor.

The reciprocating compressor may be improved in performance when the cylinder and the piston are smoothly lubricated in a state where they are air-tightly sealed therebetween. For this, according to the related art, a lubricant such as oil may be supplied between the cylinder and the piston to form an oil film, thereby sealing a space between the cylinder and the piston and also lubricating the cylinder and the piston. However, a separate oil supply unit for supplying the lubricant is necessary. Also, if leakage of the oil occurs according to operation conditions of the compressor, the compressor may be deteriorated in performance. Also, since a space for receiving a predetermined amount of oil is needed, the compressor may increase in size. In addition, since an inlet of the oil supply unit has to be always immersed into the oil, the compressor may be limited in installation direction thereof.

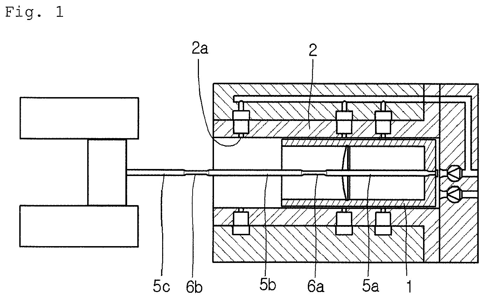

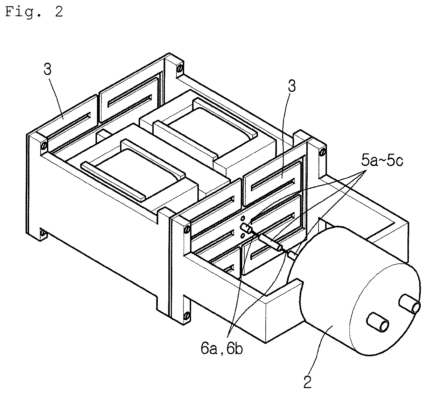

In consideration of the limitations of the oil lubrication type reciprocating compressor, as illustrated in Figs. 1 and 2, a portion of a compression gas is bypassed between a piston 1 and a cylinder 2 to form a gas bearing between the piston 1 and the cylinder 2. Here, a plurality of bearing holes 2a each of which has a small diameter and through which the compression gas is injected may pass through an inner circumferential surface of the cylinder 2.

According to this technology, a separate oil supply unit for supplying the oil may not be required between the piston 1 and the cylinder 2 to simplify a lubricating structure of the compressor. In addition, the leakage of the oil according to the operation conditions may be prevented to uniformly maintain the performance of the compressor. Also, since a space for receiving the oil is not required in a casing of the compressor, the compressor may be miniaturized and freely installed in various directions. Non-described reference numeral 3 represents a plate spring, non-described reference numerals 5a to 5c represent connecting bars, and non-described reference numerals 6a and 6b represent links.

However, in the reciprocating compressor according to the related art, foreign substances mixed into a refrigerant gas may be introduced into a gas bearing to block the gas bearing. As a result, the refrigerant gas may not be supplied between the cylinder 2 and the piston 1, and thus concentricity between the piston 1 and the cylinder 2 may be twisted to cause friction loss or abrasion while the piston 1 is reciprocated in the state where the piston is closely attached to the cylinder 2. Particularly, when oil remaining in a refrigeration cycle is mixed with the refrigerant, and then the mixture is introduced into the gas bearing of the compressor, foreign substances may block the gas bearing due to viscosity of the oil to deteriorate performance of the bearing. Also, when the oil is introduced between the cylinder 2 and the piston 1, the foreign substances mixed with the oil may adhere between the cylinder 2 and the piston 1 to cause the friction loss or abrasion.

In consideration of this limitation, a bearing hole for the gas bearing may increase in size to prevent the bearing hole from being blocked by the foreign substances. However, in this case, the compressed refrigerant gas may not be discharged into the refrigeration cycle, and thus an amount of refrigerant introduced into the gas bearing may increase to increase the compression loss.

WO 2013/071382 (A2) relates to a gas compressor comprising at least one flow restrictor with the ability of filtering gas impurities, however said document does not show a bearing hole comprising a guide groove formed in a ring shape on an outer circumferential surface of a cylinder and a flow resistance part comprising a fabric wire that is wound several times in the guide groove. US 2009/238701 A1 relates to a compressor having a gas-bearing piston, in particular for use as a refrigerant compressor in a domestic refrigerator. EP 2 568 173 A2 relates to a reciprocating compressor, and more particularly, to a reciprocating compressor with a gas bearing. US 2010/146922 A1 relates to filter elements and their manufacture by winding a wire about a mandrel. US 2 752 001 A relates to filters for gaseous fluids for use in motors, compressors, and other engines, particularly heat engines, and other machines in which gaseous fluids are used or passed through.

### SUMMARY

The present invention is defined in the attached claims. The embodiments of the description which do not fall within the scope of said claims are provided for illustrative purposes only and do not form part of the present invention. Embodiments provide a reciprocating compressor in which introduction of foreign substances mixed with a refrigerant gas into a gas bearing is prevented to prevent friction losses or abrasion between a cylinder and a piston from increasing due to blocking of the gas bearing by the foreign substances.

Embodiments also provide a reciprocating compressor in which introduction of oil circulating into a refrigeration cycle into a gas bearing is prevented to prevent the gas bearing from being blocked and to reduce a friction losses and abrasion between a cylinder and a piston.

Embodiments also provide a reciprocating compressor in which a hole for a gas bearing is adequately maintained in size to prevent the gas bearing from being blocked by foreign substances and prevent a refrigerant gas from being excessively introduced into the gas bearing, thereby reducing a compression loss due to the gas bearing.

In one embodiment, a reciprocating compressor includes: a cylinder having a compression space; a piston inserted into the cylinder to define the compression space while being reciprocated, the piston having a suction passage to communicate with the compression space; a gas bearing having a bearing hole passing through the cylinder so that a refrigerant gas is injected between the cylinder and the piston to support the piston with respect to the cylinder; and a flow resistance part disposed on an outer circumferential surface of the cylinder or one side of the cylinder to restrict a flow of the refrigerant gas flowing toward the bearing hole.

The bearing hole includes a gas guide groove recessed from the outer circumferential surface of the cylinder; and a nozzle part extending from the gas guide groove toward an inner circumferential surface of the cylinder.

The gas guide groove has a cross-sectional area greater than that of the nozzle part.

The flow resistance part is disposed in the gas guide groove.

The flow resistance part : includes a fine wire that is wound several times in the bearing hole.

The fine wire includes a fabric wire.

The fine wire has a cross-sectional area less than or equal to that of the nozzle part.

The flow resistance part may include one block spaced apart from an inner circumferential surface of the gas guide groove and having a preset cross-sectional area, and the refrigerant gas may flow through a gap that is defined between the block and the gas guide groove.

The flow resistance part may include a porous member having a plurality of vents, and each of the vents may have a cross-sectional area less than that of the nozzle part.

The flow resistance part may include a gas dispersion groove communicating with the gas guide groove to disperse a portion of the refrigerant gas and recessed by a preset depth in the outer circumferential surface of the cylinder, and the gas dispersion groove may extend in a direction crossing the extension direction of the gas guide groove.

The gas dispersion groove may have a cross-sectional area greater than that of the nozzle part and less than or equal to that of the gas guide groove.

The flow resistance part may include at least one of an activated carbon, a centrifuge, and a membrane which are disposed in a passage through which the refrigerant gas flows.

The reciprocating compressor may further include: a discharge cover coupled to the cylinder, the discharge cover having a discharge space (S2) for the refrigerant gas; and a discharge pipe coupled to the discharge cover to guide discharge of the refrigerant gas, wherein the flow resistance part may include: a filter housing connected to the discharge pipe; and a filter disposed within the filter housing.

The reciprocating compressor may further include a gas guide tube extending from the filter housing of the flow resistance part to the discharge cover.

The reciprocating compressor may further include: a casing; a suction tube coupled to the casing; and a suction muffler disposed within the casing, the suction muffler being coupled to an inlet-side of the suction passage of the piston, wherein the flow resistance part may include a filter disposed in the suction tube or the suction muffler.

In another embodiment, a reciprocating compressor includes: a casing having an inner space communicating with a suction tube; a frame disposed in the inner space of the casing; a reciprocating motor coupled to the frame, the reciprocating motor including a mover that is linearly reciprocated; a cylinder coupled to the frame, the cylinder having a compression space; a piston inserted into the cylinder and reciprocated, the piston having a suction passage passing in a longitudinal direction thereof to guide a refrigerant into the compression space; a gas bearing having a bearing hole passing through the cylinder so that a refrigerant gas is injected between the cylinder and the piston to support the piston with respect to the cylinder; and a filter disposed in the bearing hole to prevent foreign substances from being introduced into the cylinder.

The bearing hole may include: a gas guide groove in which the filter is disposed; and a nozzle part extending inward from the gas guide groove in a radius direction, the nozzle part having a cross-sectional area less than that of the gas guide groove.

The filter may be formed by winding a fine wire including a fabric wire several times.

The filter may include a porous member.

The filter may include one block having a cross-sectional area less than that of the bearing hole.

The details of one or more embodiments are set forth in the accompanying drawings and the description below. Other features will be apparent from the description and drawings, and from the claims.

### BRIEF DESCRIPTION OF THE DRAWINGS

Fig. 1 is a cross-sectional view of an example in which a conventional gas bearing is applied to a reciprocating compressor.
Fig. 2 is a perspective view of an example in which a conventional plate spring is applied to the reciprocating compressor.
Fig. 3 is a cross-sectional view of a reciprocating compressor according to an embodiment.
Fig. 4 is an enlarged cross-sectional view illustrating a portion A of Fig. 3.
Figs. 5 to 7 are cross-sectional views illustrating examples of a flow resistance part of Fig. 4.
Fig. 8 is a perspective view of a cylinder that is illustrated for explaining a modified example of the flow resistance part of Fig. 4.
Fig. 9 is a cross-sectional view of a reciprocating compressor that is illustrated for explaining a modified example of the flow resistance part in the reciprocating compressor of Fig. 3.
Fig. 10 is a cross-sectional view illustrating the inside of the flow resistance part of Fig. 9.
Fig. 11 is a cross-sectional view illustrating a modified example of the flow resistance part of Fig. 9.

### DETAILED DESCRIPTION OF THE EMBODIMENTS

Reference will now be made in detail to the embodiments of the present disclosure, examples of which are illustrated in the accompanying drawings.

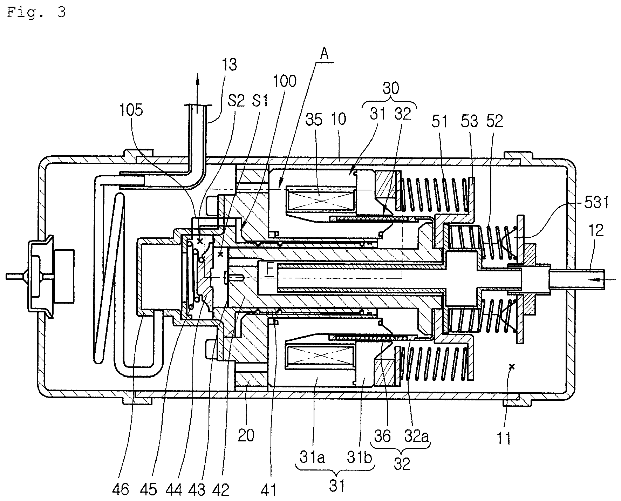

Fig. 3 is a cross-sectional view of a reciprocating compressor according to an embodiment.

Referring to Fig. 3, in a reciprocating compressor according to an embodiment, a suction tube 12 may be connected to an inner space 11 of a casing 10, and a discharge tube 13 may be connected to a discharge space S2 of a discharge cover 46 that will be described later. A frame 20 may be disposed in the inner space 11 of the casing 10, and a stator 31 and a cylinder 41 of a reciprocating motor 30 may be fixed to the frame 20. A piston 42 coupled to a mover 32 of the reciprocating motor 30 may be inserted into and coupled to the cylinder 41 so that the piston 42 is reciprocated. Resonance springs 51 and 52 for guiding resonance movement of the piston 42 may be disposed on both sides of the piston 42 in a moving direction of the piston 42, respectively.

Also, a compression space S1 may be defined in the cylinder 41, and a suction passage F may be defined in the piston 42. A suction valve 43 for opening/closing the suction passage F may be disposed on an end of the suction passage F, and a discharge valve 44 for opening/closing the compression space S1 of the cylinder 41 may be disposed on a front end of the cylinder 41.

As described above, in the reciprocating compressor according to the current embodiment, when a power is applied to the reciprocating motor 30, the mover 32 of the reciprocating motor 30 may be reciprocated with respect to the stator 31. Thus, the piston 42 coupled to the mover 32 may be linearly reciprocated within the cylinder 41 to suction and compress a refrigerant, thereby discharging the compressed refrigerant.

In detail, when the piston 42 is retreated, the suction valve 43 may be opened to suction the refrigerant of the casing 10 into the compression space S1 through the suction passage F. When the piston 42 advances, the suction valve 43 may be closed to close the suction passage F, thereby compressing the refrigerant of the compression space S1. Also, when the piston 42 further advances, the refrigerant compressed in the compression space S1 may open the discharge valve 44 and then be discharged to move into an external refrigeration cycle.

Here, in the reciprocating motor 30, a coil 35 may be inserted into and coupled to the stator 31, and an air gap may be defined in only one side with respect to the coil 35. The stator in which the coil 35 is disposed with respect to the air gap may be called an "outer stator", and the stator disposed on a side opposite to the outer stator may be called an "inner stator". When viewed in Fig. 3, the outer stator may be disposed above the air gas, and the inner stator may be disposed under the air gap.

Also, a magnet 36 that is inserted into the air gap of the stator 31 and reciprocated in the moving direction of the piston may be disposed in the motor 32.

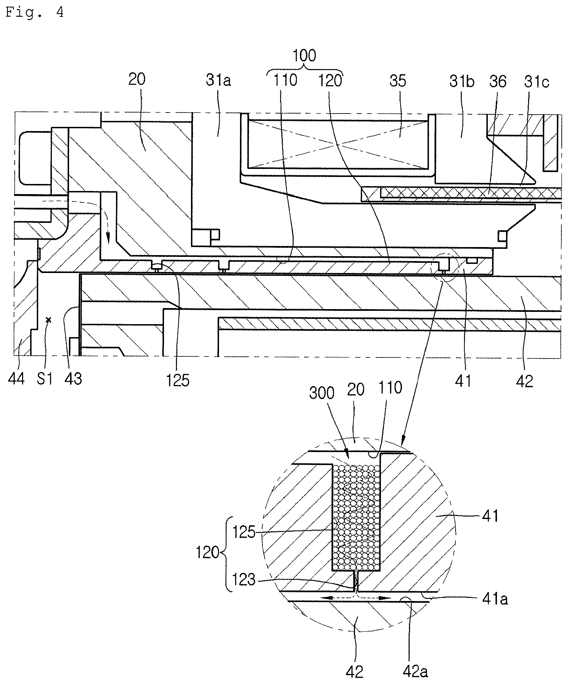

The stator 31 may include a plurality of stator blocks 31a and a plurality of pole blocks 31b each of which is coupled to one side of each of the stator blocks 31a to form an air gas part (see reference numeral 31c of Fig. 4) together with each of the stator blocks 31a.

The stator blocks 31a and the pole blocks 31b may have an arc shape when being projected in an axial direction by stacking a plurality of sheets of thin stator cores in layers. Also, the stator blocks 31a may have a concave groove ( 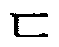 ) shape when being projected in the axial direction, and the pole blocks 31b may have a rectangular (I) shape when being projected in the axial direction.

Here, the "axial direction" or a "longitudinal direction" may represent a horizontal direction. Also, a direction from the suction tube 12 toward the compression space S1 may be called a front side in the axial direction. On the other hand, a direction from the compression space S1 toward the suction tube 12 may be called a rear side in the axial direction. Also, a "radius direction" may be a vertical direction in Fig. 3 and be understood as a direction perpendicular to the axial direction. The above-described directions may be equally applicable over this specification.

The mover 32 may include a magnet holder 32a having a cylindrical shape and a plurality of magnets 36 coupled to an outer circumferential surface of the magnet holder 32a along a circumferential direction to form a magnetic flux together with the coil 35.

The magnet holder 32a may be formed of a nonmagnetic material to prevent the magnetic flux from leaking. However, it may not be necessary that the magnetic holder 32a is formed of the nonmagnetic material. Also, the outer circumferential surface of the magnetic holder 32a may have a circular shape so that the magnets 36 line-contact and are attached to the outer circumferential surface of the magnetic holder 32a. Also, a magnet mount groove (not shown) having a band shape so that the magnets 36 are inserted and supported in a moving direction thereof may be defined in the outer circumferential surface of the magnet holder 32a.

Each of the magnets 36 may have a hexahedral shape, and the magnets 36 may be attached on the outer circumferential surface of the magnet holder 32a by the piece. Also, when the magnets 36 are attached by the piece, a separate fixing ring or a support member (not shown) such as a taper formed of a composite material may be surrounded around the outer circumferential surface of each of the magnets 36 to fix the magnet 36.

The magnets 36 may be sequentially attached to the outer circumferential surface of the magnet holder 32a along the circumferential direction. However, since the stator 31 is constituted by the plurality of stator blocks 31a, and the plurality of stator blocks 31a are arranged at a predetermined distance along the circumferential direction, the magnets 36 may also be attached to the outer circumferential surface of the magnet holder 32a at a predetermined distance along the circumferential direction, at a distance between the stator blocks 31a. In this case, the magnet 36 may be reduced in use amount.

A length of the magnet 36 in the moving direction may not be less than that of the air gas part 31c in the moving direction. In detail, the length of the magnet 36 in the moving direction may be greater than that of the air gap part 31c in the moving direction. An end of one side of the magnet 36 in at least the moving direction may be disposed within the air gap part 31c at an initial position or during the operation. In this case, the magnet 36 may be stably reciprocated.

Only one magnet 36 may be disposed in the moving direction. In some cases, a plurality of magnets 36 may be disposed in the moving direction. Also, N and S poles of the magnet 36 may correspond to each other in the moving direction.

The stator 31 may have only one air gap part 31c. In some cases, air gap parts (not shown) may be defined in both sides of a longitudinal direction with respect to the coil. In this case, the mover may have the same structure as the foregoing embodiment.

The resonance springs 51 and 52 include first and second resonance springs 51 and 52 which are respectively disposed on both sides in forward and backward directions of a spring support 53 coupled to the mover 32 and the piston 42.

Each of the first and second resonance springs 51 and 52 may be provided in plurality. Also, each of the plurality of first and second resonance springs 51 and 52 may be arranged in the circumferential direction. Alternatively, only one of the first and second resonance springs 51 and 52 may be provided in plurality, and the other one may be provided in only one.

Each of the first and second resonance springs 51 and 52 may include a compression coil spring. Thus, when each of the first and second resonance springs 51 and 52 are expanded and contracted, a side force may occur. Also, the first and second resonance springs 51 and 52 may be arranged to offset the side force or torsion moment thereof.

For example, when two first resonance springs 51 and two second resonance springs 52 are alternately arranged in the circumferential direction, ends of each of the first and second resonance springs 52 may be wound in a counterclockwise direction at the same position with respect to a center of the piston 42. Also, the resonance springs disposed in a diagonal direction may be symmetrically disposed and arranged to match corners to each other so that the side force and the torsion moment occur in directions opposite each other.

Here, a spring protrusion 531 may be disposed on a frame or spring support 53, to which an end of each of the first and second resonance springs 51 and 52 is fixed, so that each of the resonance springs 51 and 52 is press-fitted and fixed. Here, this is done for preventing the resonance springs 51 and 52, which are arranged to match corners to each other, from rotating.

The first and second resonance springs 51 and 52 may be provided in the same number or numbers different from each other. Also, the first and second resonance springs 51 and 52 may have the same elasticity.

In summary, according to characteristics of the compression coil spring, a side force may occur while a spring is expanded or contracted to twist a feature of straight of the piston 42. However, according to the current embodiment, since the plurality of first and second resonance springs 51 and 52 are wound in directions opposite to each other, the side force and torsion moment that are generated in each of the resonance springs 51 and 52 may be offset by the resonance springs that are disposed in the diagonal direction to maintain the feature of straight of the piston 42 and prevent surfaces of the resonance springs 51 and 52 from being worn.

Also, since the compression coil spring is slightly deformed in a longitudinal direction without restricting the piston 42 in a transverse direction, the compressor may be installed horizontally or vertically. In addition, since it is unnecessary to connect the mover 42 and the piston 42 to each other through a separate connecting bar or link, manufacturing costs and assembling number may be reduced.

In the reciprocating compressor as described above, since oil is not provided between the cylinder 41 and the piston 42, when the friction loss between the cylinder 41 and the piston 42 is reduced, the compressor may be improved in performance. For this, in the current embodiment, a gas bearing in which a portion of the compression gas is bypassed between an inner circumferential surface 41a of the cylinder 41 and an outer circumferential surface of the piston 42 to allow the cylinder 41 and the piston 42 to be lubricated therebetween by using a gas force may be provided.

Fig. 4 is an enlarged cross-sectional view illustrating a portion A of Fig. 3. That is, Fig. 4 is a cross-sectional view of a gas bearing according to an embodiment.

Referring to Figs. 3 and 4, the reciprocating compressor according to an embodiment includes a gas bearing 100 for at least one portion of the refrigerant gas discharged through the opened discharge valve 44 into the cylinder 41.

The gas bearing 100 includes a gas pocket 110 recessed by a predetermined depth in an inner circumferential surface of a frame 20, a bypass tube 105 extending from the discharge cover 46 to the gas pocket 110, and a plurality of rows of bearing holes 120 passing through the inner circumferential surface 41a of the cylinder 41. Here, the rows of the bearing holes 120 may represent bearing holes defined in an end of the cylinder in a longitudinal direction, i.e., defined in the same circumference.

The gas pocket 110 may have a ring shape on the entire inner circumferential surface of the frame 20. In some cases, the gas pocket 110 may be provided in plurality at a predetermined distance along a circumferential direction of the frame 20.

Also, the gas pocket 110 may be disposed between the frame 20 and the cylinder 41. However, in another embodiment, the gas pocket 110 may be disposed on a front end of the cylinder 41 in the longitudinal direction of the cylinder. In this case, the gas pocket 110 may directly communicate with the discharge space S2 of the discharge cover 46. Thus, since a separate gas guide part is not required, the assembling process may be simplified, and also, the manufacturing costs may be reduced.

The bypass tube 105 may extend from one point of the discharge cover 46 to the other point of the discharge cover 46. The one point and the other point may be understood as portions through which at least one portion of the discharge cover passes to allow the refrigerant to flow. Also, the other point may communicate with the gas pocket 110.

At least one portion of the refrigerant gas may flow from one point of the discharge cover 46 to the bypass tube 105. Then, the refrigerant gas may flow into the gas pocket 110 via the other point of the discharge cover 46.

In the current embodiment, even though the piston 42 has a length greater than that of the cylinder 41 to increase a self-weight of the piston 42, sagging of the piston 42 may occur due to the characteristics of the compression coil spring. Thus, the friction loss and abrasion may occur between the piston 42 and the cylinder 41. Particularly, in a case where oil is not supplied between the cylinder 41 and the piston 42, and gas is supplied to support the piston 42, when the bearing holes 120 are adequately defined, the sagging of the piston 41 may be prevented to prevent the friction loss and abrasion from occurring between the cylinder 41 and the piston 42.

For example, the bearing holes 120 passing through the inner circumferential surface 41a of the cylinder 41 may be defined at a predetermined distance over the entire area in the longitudinal direction of the piston 42. That is, when the piston 42 has a length greater than that of the cylinder 41 and is reciprocated in an axial direction, the bearing holes 120 for injecting a gas between the cylinder 41 and the piston 42 may be uniformly defined in front and rear areas of the piston 42 adjacent to the compression space S1 as wall as a rear area of the piston 42. Thus, the gas bearing 100 may stably support the piston 41 to prevent the friction loss and abrasion from occurring between the cylinder 41 and the piston 42.

Particularly, according to the characteristics of the compression coil springs 51 and 52, the deformation in the transverse direction may be relatively large to cause the sagging of the piston 42. However, since the bearing holes 120 are uniformly defined over the entire area in the longitudinal direction of the piston 42, the piston 42 may not be sagged and thus be smoothly reciprocated to effectively prevent the friction loss and abrasion from occurring between the cylinder 41 and the piston 42.

In the reciprocating compressor according to the current embodiment, when the total cross-sectional area of the bearing holes 120 defined in the front portion of the cylinder 41 is greater than that of the bearing holes 120 defined in the rear portion of the cylinder 41, the sagging of the piston 42 may be prevented, and thus the occurrence of the friction loss and abrasion between the cylinder 41 and the piston 42 may be prevented.

For this, the number of bearing holes defined in the front portion of the cylinder 41 may be greater than that of bearing holes defined in the rear portion of the cylinder 41, or a cross-sectional area of each of the bearing holes defined in the lower portion may be greater than that of each of the bearing holes defined in the upper portion. Also, the number of bearing holes or a cross-sectional area of the bearing hole may gradually increase from the front side of the cylinder 41 toward the rear side to improve a front-side supporting force of the gas bearing. For example, Fig. 4 illustrates a structure in which two bearing holes 120 are defined in the front portion of the cylinder 42, and one bearing hole 120 is defined in the rear portion of the cylinder 42.

Also, the bearing hole 120 includes a gas guide groove 125 that is recessed by a predetermined depth from the outer circumferential surface of the cylinder 41 to guide the compression gas introduced into the gas pocket 110 toward each of the bearing holes 120. The gas guide groove 125 may serve as a buffer for the compression gas. Also, a nozzle part 123 extending from the gas guide groove 125 toward the inner circumferential surface 41a of the cylinder 41 may be disposed in the bearing hole 120. The nozzle part 123 may be connected to the inner circumferential surface 41a of the cylinder 41.

A length of the gas guide groove 125 in a radius direction may be greater than that of the nozzle part 123 in the radius direction. Also, the gas guide groove 125 may have a diameter greater than that of the nozzle part 123.

The gas guide groove 125 may have a ring shape so that the bearing holes in each row communicate with each other. Alternatively, the bearing holes in each row may be independent from each other and be defined at a predetermined distance along the circumferential direction. For example, when the gas guide grooves 125 are defined at a predetermined distance along the circumferential direction so that the gas guide grooves 125 are respectively provided in the bearing holes 120, the compression gas may have a uniform pressure, and the cylinder 41 may be improved in strength.

When the gas bearing 100 is applied as described in the current embodiment, if foreign substances mixed in the refrigerant are introduced into the bearing holes 120, the foreign substances may block the bearing holes 120 that are fine holes to restrict the smooth introduction of the refrigerant between the cylinder 41 and the piston 42. Particularly, when the refrigerant in which oil is mixed is introduced into the gas bearing, the foreign substances may solidly block the bearing holes due to the viscosity of the oil to restrict the introduction of the refrigerant gas and increase the abrasion and friction loss between the cylinder 41 and the piston 42. Thus, it may be important in reliability of the compressor to prevent the oil or foreign substances from being introduced into the gas bearing 100.

In consideration of the above-described structure, the bearing hole may be reduced in cross-sectional area to prevent the foreign substances from being introduced into the bearing hole. However, if the bearing hole is too small in size, possibility of the blocking of the bearing hole due to the foreign substances may increase. On the other hand, although the bearing hole increases in cross-sectional area to prevent the foreign substances from blocking the bearing hole, a large amount of gas refrigerant may be introduced into the gas bearing to increase in compression loss, thereby reducing compressor efficiency.

Thus, in the current embodiment, the bearing hole may be provided to an adequate size, and the flow resistance part may be disposed on the inlet-side of the bearing hole to prevent the oil or foreign substances from being introduced into the bearing hole and also prevent the compression gas from being excessively introduced, thereby improving the compressor performance.

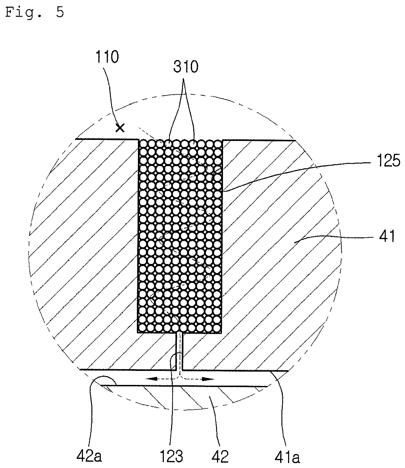

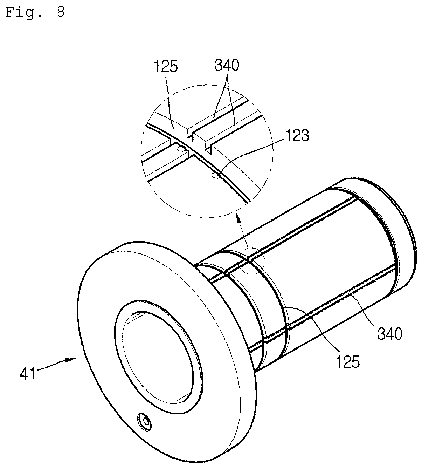

Figs. 5 to 7 are cross-sectional views illustrating examples of a flow resistance part of Fig. 4, and Fig. 8 is a perspective view of a cylinder that is illustrated for explaining a modified example of the flow resistance part of Fig. 4.

A flow resistance part 300 may be disposed in a gas guide groove 125 according to an embodiment.

As illustrated in Fig. 5, the flow resistance part 300 may include a fine wire 310 that is wound several times in the gas guide groove 125. The fine wire 310 may have a fabric wire having a high filtering effect. For another example, the fine wire 310 may include a metal member.

Also, the fine wire 310 may have a cross-sectional area equal to or less than that of the nozzle part 123 so that the fine wire 310 does not fully cover the nozzle part 123.

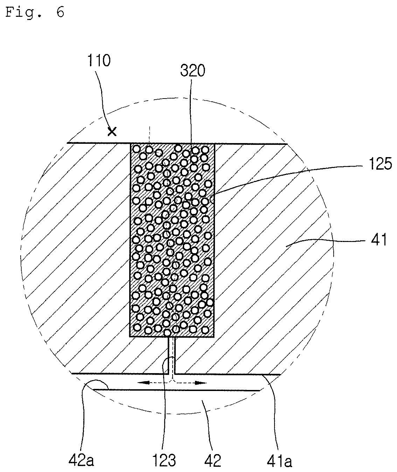

For another example, as illustrated in Fig. 6, the flow resistance part 300 may include a plurality of porous members 320 having a plurality of fine vents. Each of the fine vents of the porous members 320 may have a cross-sectional area less than that of the nozzle part 123. Thus, oil or foreign substances may be effectively filtered to prevent the nozzle part 123 from being blocked.

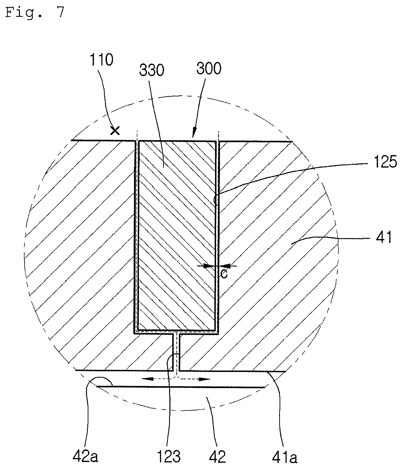

For another example, as illustrated in Fig. 7, the flow resistance part 300 may include a block 300 that is disposed to be spaced apart from an inner circumferential surface of the gas guide groove 125. The block 330 may have a cross-sectional area less than that of the gas guide groove 125. Thus, the compression gas may pass through a gap C between the block 330 and the gas guide groove 125 and then be introduced into the nozzle part 123.

When the flow resistance part 300 are provided as the porous members 320 or the block 330, the flow resistance part 300 may be applied to the gas guide groove 125 having a circular band shape. Alternatively, the flow resistance part 300 may also be provided to the gas guide groove 125 having a groove shape and independently defined in each of the bearing holes 123.

For another example, as illustrated in Fig. 8, the flow resistance part 300 may include a gas dispersion groove 340 defined in the outer circumferential surface of the cylinder 41 to communicate with the gas guide groove 125. The gas dispersion groove 340 may be formed by recessing at least one portion of the outer circumferential surface of the cylinder 41 and extend in a direction crossing the gas guide groove 125. For example, the gas dispersion groove 340 may extend in forward and backward directions of the outer circumferential surface of the cylinder 41.

At least one portion of the refrigerant gas introduced into the bearing hole 120 may flow into the gas dispersion groove 340 and then be dispersed. Thus, it may prevent the refrigerant gas from be excessively introduced into the nozzle part 123 or prevent the oil or foreign substances from being introduced into the nozzle part 123.

The gas dispersion groove 340 may have a cross-sectional area greater than that of the nozzle part 123 and less than or equal to that of the gas guide groove 125. In this case, the refrigerant gas introduced into the gas guide groove 125 may be dispersed into the gas dispersion groove 340 having the relatively large cross-sectional area than the nozzle part 123 having the relatively small cross-sectional area. As a result, even though the nozzle part 123 has a cross-sectional area greater than a predetermined area, since the refrigerant gas may not be introduced into the nozzle part 123, but be guided into the gas dispersion groove 240, the blocking of the bearing hole may be previously prevented.

For another example, the flow resistance part may be disposed in an intermediate portion of a gas guide tube connecting the discharge space S2 to the gas pocket 110.

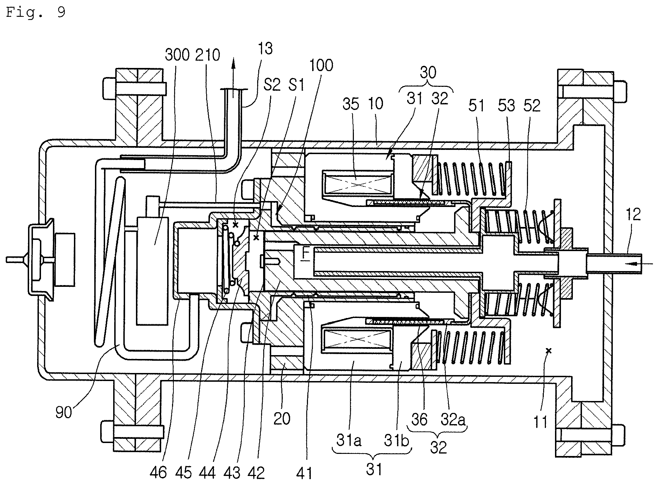

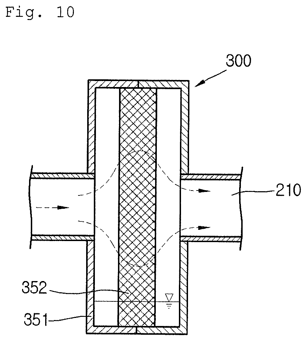

Fig. 9 is a cross-sectional view of a reciprocating compressor that is illustrated for explaining a modified example of the flow resistance part in the reciprocating compressor of Fig. 3, and Fig. 10 is a cross-sectional view illustrating the inside of the flow resistance part of Fig. 9.

Referring to Figs. 9 and 10, a reciprocating compressor includes a flow resistance part 300 into which at least one portion of a refrigerant gas discharged through a discharge valve 44 is introduced and a gas guide tube 210 connected to the flow resistance part 300 to guide the refrigerant gas into the gas pocket 110.

In detail, the flow resistance part 300 may be connected to a discharge pipe 90 that is connected to a discharge cover 46 to guide discharge of a refrigerant. The discharge pipe 90 may be connected to a discharge tube 13.

The gas guide tube 210 may have a length greater than a preset length so that the refrigerant gas introduced into the gas pocket 110 through the gas guide tube 210 is heat-exchanged with a low-temperature suction refrigerant that is filled into an inner space 11 of a casing 10 and thus is cooled and decompressed. For example, the gas guide tube 210 may extend from a filter housing 351 of the flow resistance part 300 to the discharge cover 46 to communicate with the gas bearing 100. The refrigerant may be introduced into a gas bearing 100, i.e., the gas pocket 110 via portions through which the gas guide tube 210 and the discharge cover 46 pass.

For another example, the gas guide tube 210 may be directly connected to a discharge space S2 of the discharge cover 46 coupled to a front end of a cylinder 41 to extend to the gas bearing 100.

The flow resistance part 300 includes the filter housing 351 and a filter 352 disposed within the filter housing 351 to filer oil or foreign substances. The filter housing 351 may be connected to a discharge pipe 90 through a predetermined tube.

The filter 352 may be provided as an adsorbent filter such as activated carbon that is capable of adsorbing the oil. Alternatively, the filter 352 may be provided as a cyclone filter for filtering and collecting the oil or the foreign substance such as metal pieces by using a centrifugal effect and a membrane filter using a filtering effect.

As described above, when the flow resistance part 300 is disposed between the discharge space S2 and the gas pocket 110, a portion of the compressed refrigerant gas may be introduced into the filter housing 351 via the discharge pipe 90 or directly introduced into the filter housing 351 to pass the filter 352. In this process, the foreign substances and oil may be filtered by the filter 352 to prevent the foreign substances or oil from being introduced into the gas bearing 100.

Thus, the blocking of the bearing hole that is a fine hole by the foreign substances may be prevented to allow the gas bearing to smoothly operate and stably support the cylinder and the piston. In addition, the filter housing 351 may serve as a kind of silencer and reduce a pressure pulse of the discharged refrigerant to reduce discharge noises of the compressor.

Also, since the gas guide tube 210 is disposed outside the discharge cover, and the gas guide tube has a relatively long length, the compression gas introduced into the gas pocket of the gas bearing may be cooled by the low-temperature suction refrigerant that is filled into the inner space of the casing to cool the cylinder constituting the gas pocket, thereby reducing a specific value of the compression space to improve compressor efficiency.

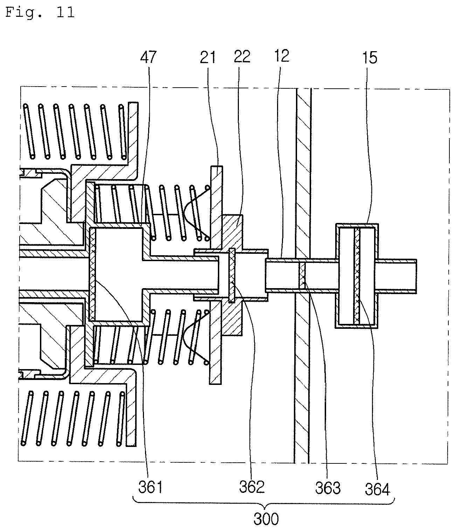

Fig. 11 is a cross-sectional view illustrating a modified example of the flow resistance part of Fig. 9.

As illustrated in Fig. 11, a flow resistance part 300 according to another embodiment may be disposed on a suction-side of a compressor.

Filters 361 to 364 may be disposed within a suction muffler 47 coupled to an inlet end of a suction passage F of a piston 42, disposed within an intermediate tube 22 coupled to a back cover 21, disposed within a suction tube 12 coupled to a casing 10, or disposed within a suction muffler 15 coupled to the casing 10. Here, the back cover 21 may be understood as a cover member that supports a rear portion of a second resonance spring 52.

The filters 361 to 364 may include an adsorption filter, a cyclone filter, or a membrane filter as described above. Also, when the flow resistance part is disposed on the suction-side in the current embodiment, the operation effects may be similar to those according to the foregoing embodiments. However, in the current embodiments, since the flow resistance part is disposed on the suction-side of the compression space, foreign substances may be filtered before a refrigerant is suctioned into the compression space to previously prevent a cylinder and piston from be worn by the foreign substances. In the foregoing embodiments, when the cylinder is inserted into a stator of a reciprocating motor, or the reciprocating motor is mechanically coupled to a compression unit including the cylinder at a predetermined distance, a position of a bearing hole may be equally applicable to the current embodiment. Thus, detailed descriptions thereof will be omitted.

Also, in the foregoing embodiments, the piston may be reciprocated, and the resonance spring may be disposed on each of both sides of the piston in the moving direction thereof. In some cases, the cylinder may be reciprocated, and the resonance spring may be disposed on each of both sides of the cylinder. In this case, the bearing holes may be arranged as described in the foregoing embodiments. Thus, detailed descriptions thereof will be omitted.

In the reciprocating compressor according to the embodiments, since the flow resistance part is disposed on the inlet-side of the bearing hole, the bearing hole may have an adequate size, and also the introduction of the oil or foreign substances into the bearing hole may be prevented to allow the compression gas having an adequate amount to serve as the bearing, the improving the compression performance.

Also, since the gas guide tube is separated from the discharge cover and disposed in the inner space of the casing, the high-temperature refrigerant gas discharged into the compression space may be heat-exchanged with the suction refrigerant filled into the inner space of the casing and thus be cooled. Thus, the cylinder constituting the gas pocket may be cooled to reduce the specific volume of the compression space, thereby improving the compressor performance.

Also, since the vibration or noises generated while the refrigerant is discharged into the compression space may be offset in the gas guide part, the vibration or noises of the compressor may be reduced.

Although embodiments have been described with reference to a number of illustrative embodiments thereof, it should be understood that numerous other modifications and embodiments can be devised by those skilled in the art that will fall within the scope of the claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A reciprocating compressor comprising:
a cylinder (41) having a compression space;
a piston (42) inserted into the cylinder (41) to compress the compression space (S1) while being reciprocated,
a gas bearing (100) having at least one bearing hole (120) passing through the cylinder (41) to guide injection of refrigerant into a space between the cylinder (41) and the piston (42), the gas bearing (100) supporting the piston with respect to the cylinder; and
a flow resistance part (300) disposed on an outer circumferential surface of the cylinder (41) or one side of the cylinder (41) being configured to restrict a flow of the refrigerant flowing toward the bearing hole (120),
the piston (42) having a suction passage communicating with the compression space; the bearing hole (120) comprises a guide groove (125) formed in a ring shape on an outer circumferential surface of the cylinder in a circumferential direction, and recessed from the outer circumferential surface of the cylinder (41) and a plurality of nozzle parts (123) provided along the circumferential direction to communicate together within the guide groove, and extending from the guide groove (125) toward an inner circumferential surface (41a) of the cylinder (41), each of the plurality of nozzle parts (123) having a cross-sectional area less than that of the guide groove (125), and
the flow resistance part (300) comprises a fabric wire (310) that is wound several times in the guide groove (125), the fabric wire (310) having a cross-sectional area equal to or less than that of the nozzle part (123) so that the fabric wire (310) does not fully cover the nozzle part (123).

2. The reciprocating compressor according to claim 1, wherein the flow resistance part (300) further comprises a dispersion groove (340) communicating with the guide groove (125) to disperse a portion of the refrigerant and recessed by a preset depth in the outer circumferential surface of the cylinder (41),
the dispersion groove (340) extending in a direction crossing the extension direction of the guide groove (125).

3. The reciprocating compressor according to claim 2, wherein the dispersion groove (340) has a cross-sectional area greater than that of the nozzle part (123) and less than or equal to that of the guide groove (125).

4. The reciprocating compressor according to any one of claims 1 to 3, wherein the flow resistance part (300) further comprises at least one of an activated carbon, a centrifuge, and a membrane which are disposed in a passage through which the refrigerant flows.

5. The reciprocating compressor according to any one of claims 1 to 4, further comprising:
a discharge cover (46) coupled to the cylinder (41), the discharge cover (46) having a discharge space (S2) for the refrigerant; and
a discharge pipe (90) coupled to the discharge cover (46) being configured to guide discharge of the refrigerant,
wherein the flow resistance part (300) comprises:
a filter housing (351) connected to the discharge pipe (90); and
a filter (352) disposed within the filter housing (351).

6. The reciprocating compressor according to claim 5, further comprising a guide tube extending from the filter housing of the flow resistance part to the discharge cover.

7. The reciprocating compressor according to any one of claims 1 to 6, further comprising:
a casing;
a suction tube coupled to the casing; and
a suction muffler (47) disposed within the casing (10), the suction muffler (47) being coupled to an inlet-side of the suction passage of the piston (42),
wherein the flow resistance part (300) comprises a filter disposed in the suction tube or the suction muffler.

## Patentansprüche

1. Hubkolbenverdichter, der aufweist:
einen Zylinder (41) mit einem Verdichtungsraum;
einen Kolben (42), der in den Zylinder (41) eingeführt ist, um den Verdichtungsraum (S 1) zu verdichten, während er hin und her bewegt wird,
ein Gaslager (100) mit mindestens einem Lagerloch (120), das den Zylinder (41) durchläuft, um das Einspritzen von Kältemittel in einen Raum zwischen dem Zylinder (41) und dem Kolben (42) zu führen, wobei das Gaslager (100) den Kolben im Hinblick auf den Zylinder stützt; und
ein Strömungswiderstandsteil (300), das auf einer Außenumfangsfläche des Zylinders (41) oder einer Seite des Zylinders (41) angeordnet und so konfiguriert ist, dass es eine Strömung des Kältemittels einschränkt, das zum Lagerloch (120) strömt,
wobei der Kolben (42) einen Ansaugkanal hat, der mit dem Verdichtungsraum kommuniziert; das Lagerloch (120) aufweist: eine Führungsnut (125), die in Ringform auf einer Außenumfangsfläche des Zylinders in Umfangsrichtung gebildet und von der Außenumfangsfläche des Zylinders (41) vertieft ist, und mehrere Düsenteile (123), die entlang der Umfangsrichtung vorgesehen sind, um in der Führungsnut miteinander zu kommunizieren, und sich von der Führungsnut (125) zu einer Innenumfangsfläche (41a) des Zylinders (41) erstrecken, wobei jedes der mehreren Düsenteile (123) eine Querschnittfläche hat, die kleiner als die der Führungsnut (125) ist, und
das Strömungswiderstandsteil (300) einen Gewebedraht (310) aufweist, der in der Führungsnut (125) mehrmals gewickelt ist, wobei der Gewebedraht (310) eine Querschnittfläche hat, die gleich oder kleiner als die des Düsenteils (123) ist, so dass der Gewebedraht (310) das Düsenteil (123) nicht voll abdeckt.

2. Hubkolbenverdichter nach Anspruch 1, wobei das Strömungswiderstandsteil (300) ferner eine Verteilungsnut (340) aufweist, die mit der Führungsnut (125) kommuniziert, um einen Anteil des Kältemittels zu verteilen, und um eine voreingestellte Tiefe in der Außenumfangsfläche des Zylinders (41) vertieft ist,
wobei sich die Verteilungsnut (340) in einer Richtung erstreckt, die die Verlaufsrichtung der Führungsnut (125) kreuzt.

3. Hubkolbenverdichter nach Anspruch 2, wobei die Verteilungsnut (340) eine Querschnittfläche hat, die größer als die des Düsenteils (123) und gleich oder kleiner als die der Führungsnut (125) ist.

4. Hubkolbenverdichter nach einem der Ansprüche 1 bis 3, wobei das Strömungswiderstandsteil (300) ferner eine Aktivkohle, eine Zentrifuge und/oder eine Membran aufweist, die in einem Kanal angeordnet sind, durch den das Kältemittel strömt.

5. Hubkolbenverdichter nach einem der Ansprüche 1 bis 4, der ferner aufweist:
eine Abgabeabdeckung (46), die mit dem Zylinder (41) gekoppelt ist, wobei die Abgabeabdeckung (46) einen Abgaberaum (S2) für das Kältemittel hat; und
ein Abgaberohr (90), das mit der Abgabeabdeckung (46) gekoppelt und so konfiguriert ist, dass es die Abgabe des Kältemittels führt,
wobei das Strömungswiderstandsteil (300) aufweist:
ein Filtergehäuse (351), das mit dem Abgaberohr (90) verbunden ist; und
ein Filter (352), das im Filtergehäuse (351) angeordnet ist.

6. Hubkolbenverdichter nach Anspruch 5, der ferner ein Führungsrohr aufweist, das sich vom Filtergehäuse des Strömungswiderstandsteils zur Abgabeabdeckung erstreckt.

7. Hubkolbenverdichter nach einem der Ansprüche 1 bis 6, der ferner aufweist:
ein Gehäuse;
ein Ansaugrohr, das mit dem Gehäuse gekoppelt ist; und
einen Ansaugschalldämpfer (47), der im Gehäuse (10) angeordnet ist, wobei der Ansaugschalldämpfer (47) mit einer Einlassseite des Ansaugkanals des Kolbens (42) gekoppelt ist,
wobei das Strömungswiderstandsteil (300) ein Filter aufweist, das im Ansaugrohr oder im Ansaugschalldämpfer angeordnet ist.

## Revendications

1. Compresseur à mouvement alternatif comprenant :
un cylindre (41) ayant un espace de compression ;
un piston (42) inséré dans le cylindre (41) pour comprimer l'espace de compression (S1) tout en étant animé d'un mouvement alternatif,
un palier à gaz (100) ayant au moins un trou de palier (120) passant à travers le cylindre (41) pour guider une injection de réfrigérant dans un espace entre le cylindre (41) et le piston (42), le palier à gaz (100) supportant le piston par rapport au cylindre ; et
une partie de résistance à l'écoulement (300) disposée sur une surface circonférentielle externe du cylindre (41) ou sur un côté du cylindre (41), étant configurée pour limiter un écoulement du réfrigérant s'écoulant en direction du trou de palier (120),
le piston (42) ayant un passage d'aspiration communiquant avec l'espace de compression ; le trou de palier (120) comprend une rainure de guidage (125) se présentant sous forme annulaire sur une surface circonférentielle externe du cylindre dans une direction circonférentielle, et en retrait par rapport à la surface circonférentielle externe du cylindre (41) et une pluralité de parties buse (123) fournie le long de la direction circonférentielle pour communiquer entre elles à l'intérieur de la rainure de guidage, et s'étendant de la rainure de guidage (125) en direction d'une surface circonférentielle interne (41a) du cylindre (41), chacune de la pluralité de parties buse (123) ayant une zone de section transversale inférieure à celle de la rainure de guidage (125), et
la partie de résistance à l'écoulement (300) comprend un câble textile (310) qui est enroulé plusieurs fois dans la rainure de guidage (125), le câble textile (310) ayant une zone de section transversale égale ou inférieure à celle de la partie buse (123) de sorte que le câble textile (310) ne recouvre pas complètement la partie buse (123).

2. Compresseur à mouvement alternatif selon la revendication 1, dans lequel la partie de résistance à l'écoulement (300) comprend en outre une rainure de dispersion (340) communiquant avec la rainure de guidage (125) pour disperser une partie du réfrigérant et en retrait d'une profondeur prédéfinie dans la surface circonférentielle externe du cylindre (41),
la rainure de dispersion (340) s'étendant dans une direction croisant la direction d'extension de la rainure de guidage (125).

3. Compresseur à mouvement alternatif selon la revendication 2, dans lequel la rainure de dispersion (340) a une zone de section transversale supérieure à celle de la partie buse (123) et inférieure ou égale à celle de la rainure de guidage (125).

4. Compresseur à mouvement alternatif selon l'une quelconque des revendications 1 à 3, dans lequel la partie de résistance à l'écoulement (300) comprend en outre au moins un parmi un charbon actif, une centrifugeuse, et une membrane qui sont disposés dans un passage à travers lequel s'écoule le réfrigérant.

5. Compresseur à mouvement alternatif selon l'une quelconque des revendications 1 à 4, comprenant en outre :
un couvercle d'évacuation (46) couplé au cylindre (41), le couvercle d'évacuation (46) ayant un espace d'évacuation (S2) pour le réfrigérant ; et
un tuyau d'évacuation (90) couplé au couvercle d'évacuation (46) étant configuré pour guider l'évacuation du réfrigérant,
dans lequel la partie de résistance à l'écoulement (300) comprend :
un boîtier de filtre (351) relié au tuyau d'évacuation (90) ; et
un filtre (352) disposé à l'intérieur du boîtier de filtre (351).

6. Compresseur à mouvement alternatif selon la revendication 5, comprenant en outre un tube de guidage s'étendant du boîtier de filtre de la partie de résistance à l'écoulement au couvercle d'évacuation.

7. Compresseur à mouvement alternatif selon l'une quelconque des revendications 1 à 6, comprenant en outre :
un carter ;
un tube d'aspiration couplé au carter ; et
un silencieux d'aspiration (47) disposé à l'intérieur du carter (10), le silencieux d'aspiration (47) étant couplé à un côté entré du passage d'aspiration du piston (42),
dans lequel la partie de résistance à l'écoulement (300) comprend un filtre disposé dans le tube d'aspiration ou le silencieux d'aspiration.
